# EUROPÄISCHE PATENTSCHRIFT

(11) **EP 3 392 080 B1**
(45) Veröffentlichungstag und Bekanntmachung des Hinweises auf die Patenterteilung: **28.10.2020**
(21) Anmeldenummer: 18161368.8
(22) Anmeldetag: 13.03.2018
(51) Int. Cl.: B60N 2/16, B60N 2/68, B21D 39/06, B21D 17/02, B21D 53/88

(54) **HÖHENVERSTELLEINRICHTUNG EINES KRAFTFAHRZEUGSITZES SOWIE VERFAHREN ZUR HERSTELLUNG EINER DERARTIGEN HÖHENVERSTELLEINRICHTUNG**
DEVICE FOR ADJUSTING THE HEIGHT OF A MOTOR VEHICLE SEAT AND METHOD FOR PRODUCING SUCH A DEVICE FOR ADJUSTING THE HEIGHT
DISPOSITIF DE RÉGLAGE EN HAUTEUR D'UN SIÈGE DE VÉHICULE AUTOMOBILE AINSI QUE PROCÉDÉ DE FABRICATION D'UN TEL DISPOSITIF DE RÉGLAGE EN HAUTEUR

(30) Priorität: 18.04.2017 DE 102017108218
(43) Veröffentlichungstag der Anmeldung: 24.10.2018
(73) Patentinhaber: Faurecia Autositze GmbH, 31655 Stadthagen (DE)
(72) Erfinder: Sulaiman, Hosen, 44227 Dortmund (DE); Völlmecke, Jörg, 32457 Porta Westfalica (DE); Schenke, Markus, 32469 Petershagen (DE); Schaper, Michael, 32469 Petershagen (DE)
(74) Vertreter: Bremer, Ulrich

(56) Entgegenhaltungen:
- EP-A1- 0 783 990
- DE-A1-102005 007 716
- DE-A1-102013 112 462
- JP-A- S6 087 936

## Beschreibung

Die vorliegende Erfindung betrifft eine Höhenverstelleinrichtung eines Kraftfahrzeugsitzes gemäß dem Oberbegriff des Anspruchs 1 sowie ein Verfahren zur Herstellung einer derartigen Höhenverstelleinrichtung gemäß Anspruch 5.

In der DE 10 2010 008 676 A1 ist eine Höhenverstelleinrichtung eines Kraftfahrzeugsitzes offenbart. Ein Querrohr dieser Höhenverstelleinrichtung besitzt über seine gesamte Länge einen gleichbleibenden Durchmesser, wobei seine beiden Enden als Lagerbereiche ausgebildet sind, die jeweils in einem Loch eines Sitzteilseitenrahmens drehbar gelagert sind. Auf dem Querrohr sitzen zwei Lenker, die jeweils ein Lagerloch besitzen und mit diesem auf das Querrohr aufgeschoben sind. Die Lenker sind zwischen einem am Querrohr durch Umformung ausgebildeten ersten Wulst und einem zweiten Wulst axial festgelegt. Um darüber hinaus einen drehfesten Sitz der Lenker auf dem Querrohr zu gewährleisten, sind in der Wandung des Lagerlochs der Lenker auf dem Umfang verteilte axiale Nuten vorgesehen, in die bei der Ausbildung der zweiten Wulst Material des Querrohrs fließt, so dass ein Kraftschluss zwischen dem Querrohr und den Lenkern hergestellt wird. Die unteren Enden der Lenker sind jeweils drehbar an der Fahrzeugstruktur, z. B. an Längsverstellschienen, gelagert.

Die EP 0 783 990 A1 die Verbindung eines Rohres mit einem Blechteil, insbesondere die Verbindung eines Querrohres mit einem Seitenrahmen eines Sitzes. An seinen Enden ist das Querrohr im Durchmesser reduziert, wobei der Durchmessersprung durch eine konische Schulter gebildet ist. Bei der Montage wird der im Durchmesser reduzierte Endbereich des Querrohres durch eine kreisrunde Öffnung im Blechteil hindurchgesteckt. Der Rand des Loches ist konisch ausgestellt, so dass der Rand des Loches an der konischen Schulter des Querrohres anliegt. Der im Durchmesser reduzierte Endbereich des Querrohres ist mit einem Innengewinde versehen, in das eine Schraube einschraubbar ist. Zum Montageutensil der Vorrichtung gehört weiterhin eine Kappe, die über den reduzierten Endbereich des Querrohres schiebbar ist. Der freie Rand der Kappe ist in Anpassung an die konischen Ausstellungen des Querrohres und des Blechteils aufgekelcht. Durch Anziehen der Schraube wird das Blechteil zwischen der konischen Schulter des Querrohres und der Aufkelchung der Kappe eingeklemmt.

Bei der Montage der beschriebenen Vorrichtung werden die Schrauben zunächst nicht angezogen, sondern die Blechteile an ihrem dem Querrohr abgewandten Ende an einer Unterlage befestigt. Diese Befestigungspunkte sind toleranzbehaftet. Einen Ausgleich der Toleranzen erfolgt durch ein Verschieben des Blechteils zwischen der konischen Anlageschulter des Querrohres und dem aufgekelchten Rand der Kappe. Wenn die richtige Position des Querrohres erreicht ist, werden die Schrauben fest angezogen, wodurch das Blechteil zwischen der Blechkappe und dem Querrohr verklemmt wird.

Die einen Durchmessersprung bildende Anlageschulter dient also einem Toleranzausgleich. Die konische Anlageschulter der vorliegenden Erfindung dient einem anderen Zweck, nämlich einer schonenden Kraftableitung zwischen Lenker und Querrohr, wodurch sich die Lebensdauer dieser Verbindung erhöht. Des Weiteren dient die konische Anlageschulter der vorliegenden Erfindung der Verbesserung des Materialflusses bei der Kaltverformung. Das Material fließt dabei in axiale Nuten, die in dem Lagerloch des Lenkers vorgesehen sind. Dadurch wird eine drehfeste Verbindung zwischen dem Lenker und dem Querrohr hergestellt. Im Loch des Blechteils der EP 783 990 A1 sind axiale Nuten nicht vorgesehen. Zudem würde die Anziehkraft der Schraube auch nicht ausreichen, um einen derartigen Materialfluss zu bewirken

Die DE 10 2005 007 716 A1 offenbart eine Sitzhöhenverstellung, bei der ein Querrohr in einem Durchgangsloch eines Lenkers sitzt. Dieses Loch ist mit axialen Nuten versehen, in die beim Herstellungsprozess durch Kaltverformung Material einfließt, um eine drehfeste Verbindung zwischen dem Lenker und dem Querrohr zu erreichen. Allerdings erfolgt auch bei dieser Lösung die Festlegung des Lenkers am Querrohr durch Bildung von Wülsten auf der Innenseite und der Außenseite des Lenkers, die durch die vorliegende Erfindung gerade vermieden werden sollen.

Eine gattungsgemäße Höhenverstelleinrichtung ist in der DE 10 2013 112 462 A1 beschrieben. Diese Höhenverstelleinrichtung weist ebenfalls ein Querrohr auf, weiches mit seinen beiden als Lagerbereich ausgebildeten Enden jeweils in einem Loch eines Sitzteilseitenrahmens drehbar gelagert ist, wobei auf dem Querrohr drehfest zwei Lenker sitzen, deren unteres Ende jeweils drehbar an der Fahrzeugstruktur gelagert ist. Die Lenker sind zwischen einem am Querrohr durch Umformung ausgebildeten inneren Wulst und einem äußeren Wulst axial festgelegt. Das Querrohr weist zwischen den Lagerbereichen einen Mittelbereich auf, der jeweils in einer Stufe in die im Durchmesser kleineren Lagerbereiche übergeht, wobei die Stufe durch den inneren Wulst gebildet ist und der äußere Wulst auf dem Niveau des Lagerbereichs angeordnet ist. Bei der Ausbildung des äußeren Wulstes fließt Material des Lagerbereiches in axiale Nuten des Lagerlochs des Lenkers. Dadurch wird der Lenker zusätzlich auch drehfest mit dem Querrohr verbunden.

Ein Nachteil der bekannten Lösungen ist darin zu sehen, dass die Wulste aufgrund der Faltung des Rohrmaterials sehr materialintensiv sind, was durch Bereitstellung eines Querrohres mit einer entsprechend längeren Ausgangslänge kompensiert werden muss. Des Weiteren sind die inneren Wülste starken Belastungen ausgesetzt, was zu einer Verkürzung der Lebensdauer der Verbindung zwischen dem Querrohr und den Lenkern führt.

Aufgabe der vorliegenden Erfindung ist es daher, eine Höhenverstelleinrichtung gattungsgemäßer Art zur Verfügung zu stellen, die bei Erhöhung der Lebensdauer weniger materialintensiv und einfacher herzustellen ist. Des Weiteren ist es Aufgabe der Erfindung, ein Verfahren zur Herstellung einer derartigen Verstelleinrichtung zur Verfügung zu stellen.

Diese Aufgabe wird erfindungsgemäß mit einer Höhenverstelleinrichtung gelöst, die die Merkmale des Anspruchs 1 aufweist bzw. durch ein Verfahren nach Anspruch 5.

Erfindungsgemäß erfolgt also der Übergang vom Mittelbereich zu den Lagerbereichen des Querrohres lediglich durch eine Durchmesserstufe, wodurch der sonst übliche Wulst an dieser Stelle nicht mehr erforderlich ist. Dadurch wird Material gespart, d.h., die Ausgangslänge des Querrohres kann entsprechend kürzer sein. Das spart Kosten und Gewicht.

Da im Kontaktbereich zwischen den Lagerbereichen und dem Mittelbereich konische Flächen aneinander liegen, erfolgt im Gebrauch der Höhenverstelleinrichtung eine schonende Kraftableitung zwischen Lenker und Querrohr, wodurch sich die Lebensdauer dieser Verbindung im Gegensatz zur Wulstlösung, bei der annähernd senkrechte Flächen aneinander liegen, verlängert.

Die konische Anlageschulter hat weiterhin den Vorteil, dass sie das Fließverhalten des Materials bei der Kaltverformung begünstigt.

Weitere vorteilhafte Ausgestaltungen der Erfindung ergeben sich aus den Merkmalen der Unteransprüche.

Die Erfindung wird nachstehend anhand eines Ausführungsbeispiels näher erläutert. In der dazugehörigen Zeichnung zeigt:
- Fig. 1: eine schematische Seitenansicht eines Kraftfahrzeugsitzes,
- Fig. 2: einen Längsschnitt durch eine Baugruppe einer Höhenverstelleinrichtung des Kraftfahrzeugsitzes,
- Fig. 3: eine Einzelheit A gemäß Fig. 2 im vergrößerten Maßstab,
- Fig. 4: einen perspektivischen Blick auf einen Lenker mit Zahnsegment der Baugruppe gemäß Fig. 1,
- Fig. 5: eine Draufsicht auf den Bereich eines Lagerloches des Lenkers gemäß Fig. 4,
- Fig. 6: einen Längsschnitt durch den Lenker gemäß Fig. 4, und
- Fig. 7: eine Einzelheit B gemäß Fig. 6 im vergrößerten Maßstab.

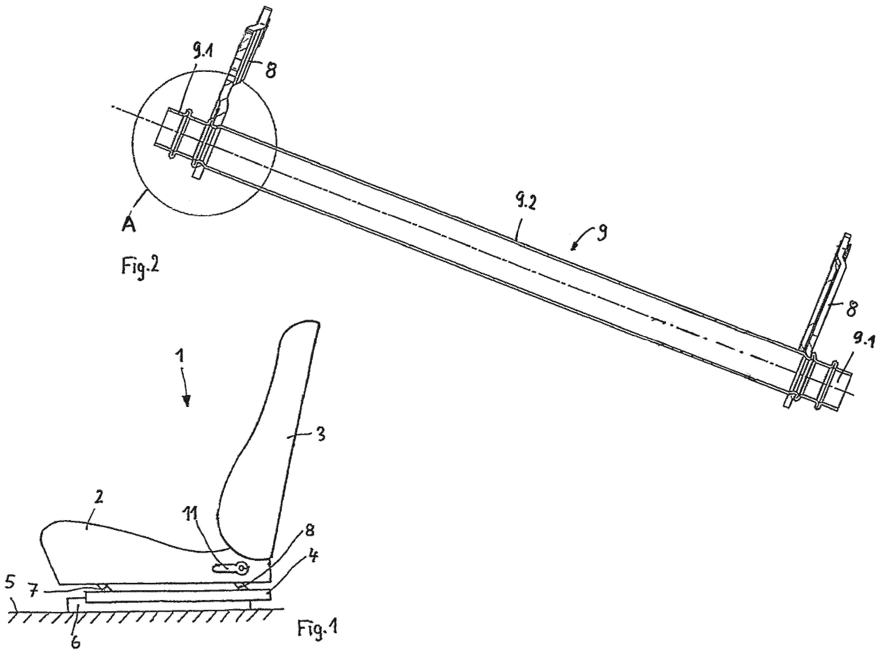

Ein in Fig. 1 gezeigter Kraftfahrzeugsitz 1 besitzt ein Sitzteil 2 und eine Rückenlehne 3. Er ist über Oberschienen 4, die verschiebbar in am Fahrzeugboden 5 befestigten Unterschienen 6 angeordnet sind, längsverstellbar am Fahrzeugboden gelagert. Darüber hinaus ist der Kraftfahrzeugsitz 1 mit einer Höhenverstelleinrichtung ausgestattet. Zu dieser Höhenverstelleinrichtung gehören zwei vordere Lenker 7 und zwei hintere Lenker 8. Die vorderen Lenker 7 sitzen drehfest auf einem nicht dargestellten vorderen Querrohr, welches mit seinen Enden drehbar in einem ebenfalls nicht dargestellten Sitzteilseitenrahmen gelagert ist. Die hinteren Lenker 8 sitzen drehfest auf einem hinteren Querrohr 9, dessen Enden als Lagerbereiche 9.1 ausgeführt sind. Mit diesen Lagerbereichen 9.1 ist das Querrohr 9 jeweils in einem Loch des nicht dargestellten Sitzteilseitenrahmens drehbar gelagert. Die unteren Enden der vorderen Lenker 7 und der hinteren Lenker 8 sind drehbar mit den Oberschienen 4 verbunden. Sie besitzen dazu an ihren unteren Enden entsprechende Lageröffnungen 10.

Zur Höhenverstellung des Kraftfahrzeugsitzes 1 ist an einer Sitzseite eine nicht dargestellte Höhenverstellpumpe vorgesehen, die über einen Bedienhebel 11 betätigt wird. Die Höhenverstellpumpe weist ein Ritzel auf, welches mit einem Zahnsegment 12 eines der hinteren Lenker 8 kämmt. Durch eine entsprechende Pumpbewegung mit dem Bedienhebel 11 beaufschlagt das Ritzel der Verstellpumpe das Zahnsegment 12 des Lenkers 8, so dass dieser in die eine oder andere Richtung um die untere Lagerstelle verschwenkt. Diese Schwenkbewegung wird über das vordere Querrohr und das hintere Querrohr 8 sowie über die Sitzteilseitenrahmen auf die anderen Lenker 7, 8 übertragen, so dass der Kraftfahrzeugsitz 1 insgesamt nach oben oder unten verstellt wird. Diese Ausbildung der Höhenverstelleinrichtung entspricht dem Stand der Technik, so dass es dazu keiner weiteren Erläuterung bedarf.

Nachstehend wird die Befestigung der Lenker 8 am hinteren Querrohr 9 exemplarisch anhand des Lenkers 8 mit dem Zahnsegment 12 erläutert. Die Befestigung des anderen Lenkers 8, der nicht direkt angetrieben wird, erfolgt in identischer Weise.

Im Ausgangszustand besitzt das Querrohr 9 auf seiner gesamten Länge einen Durchmesser d1. In einem ersten Arbeitsschritt werden die beiden Enden des Querrohres 9 auf einen Durchmesser d2 reduziert, um die Lagerbereiche 9.1 zu schaffen. Der zwischen den Lagerbereichen 9.1 liegende Mittelbereich 9.2 des Querrohres 9 behält den Durchmesser d1 bei. Die durch diese Umformung zwischen dem Mittelbereich 9.2 und den Lagerbereichen 9.1 geschaffene Durchmesserstufe kann schon konisch ausgeführt, d.h. durch einen kegelstumpfförmigen Übergang gebildet sein.

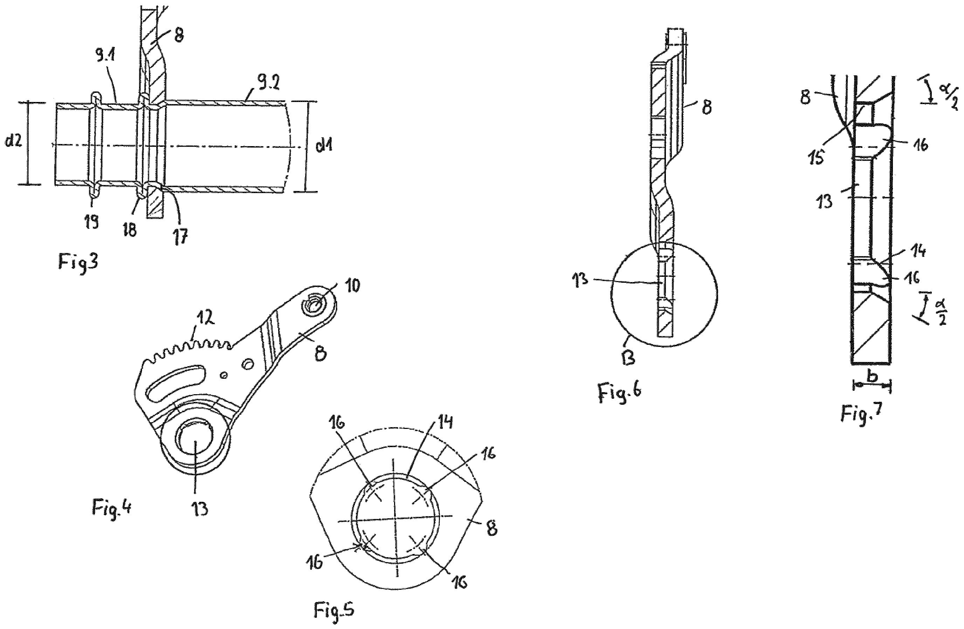

Der Lenker 8 ist mit einem Lagerloch 13 ausgestattet, dessen Durchmesser geringfügig größer ist als der Durchmesser d2 der Lagerbereiche 9.1. Das Lagerloch 13 weist eine konische Anlageschulter 14 auf, deren Flanken einen Öffnungswinkel von α = 60° zwischen sich einschließen. Etwa in der Mitte der Blechstärke b des Lenkers 8 geht die Anlageschulter 14 in eine zylindrische Wandung 15 des Lagerloches 13 über. Diese Ausbildung geht am besten aus Fig. 7 hervor.

Im Lagerloch 13 sind vier axiale Nuten 16 ausgebildet, die jeweils in einem Abstand von 90° auf dem Umfang verteilt angeordnet sind. Diese Ausführung geht am besten aus einer Zusammenschau der Fig. 5 und 7 hervor.

In einem weiteren Arbeitsschritt wird der Lenker 8 mittels seines Lagerloches 13 auf den Lagerbereich 9.1 aufgeschoben, bis er an der Durchmesserstufe zum Mittelbereich 9.2 anliegt. Anschließend wird eine Axialkraft auf den Lenker 8 und/oder das Querrohr 9 aufgebracht, um das Querrohr 9 im Bereich der Durchmesserstufe kalt zu verformen. Bei diesem Vorgang läuft die konische Anlageschulter 14 des Lagerloches 13 auf die Durchmesserstufe zum Mittelbereich 9.2 auf, wodurch die Durchmesserstufe in eine konische Anlagefläche 17 verformt wird, die an der Anlageschulter 14 anliegt. Bei dem geschilderten Verformungsvorgang fließt gleichzeitig Material des Querrohres 9 in die vier axialen Nuten 16 des Lagerloches 13 ein. Der Lenker 8 ist nun drehfest und in Richtung zum Mittelbereich 9.2 hin axial am Querrohr 9 festgelegt.

Die axiale Festlegung des Lenkers 8 in Richtung zum Mittelbereich 9.2 erfolgt lediglich an einer Durchmesserstufe, wodurch der sonst übliche innere Wulst zum Wegfall kommt. Dadurch kann die Ausgangslänge des Querrohres 9 entsprechend kürzer sein, wodurch Material eingespart wird.

Der Öffnungswinkel von α = 60 ° der Anlageschulter 14 des Lagerloches 13 begünstigt den Kaltverformungsvorgang. Da die Anlageschulter 14 und die Anlagefläche 17 in einer schrägen Ebene aneinander liegen, erfolgt im Gebrauch der Höhenverstelleinrichtung eine sanfte Kraftableitung, was sich positiv auf die Lebensdauer der Verbindung zwischen Lenker 8 und Querrohr 9 auswirkt.

Zur Komplettierung der Verbindung zwischen Lenker 8 und Querrohr 9 wird dann im Lagerbereich 9.1 ein äußerer Wulst 18 ausgebildet, der von außen am Lenker 8 anliegt. Dieser ist nun in beiden Richtungen axial am Querrohr 9 festgelegt.

Im Lagerbereich 9.1 ist im Abstand vom äußeren Wulst 18 ein weiterer Wulst 19 ausgebildet. Dieser dient dem Anschlag an den Sitzteilseitenrahmen.

## Patentansprüche

1. Höhenverstelleinrichtung eines Kraftfahrzeugsitzes, aufweisend ein Querrohr (9), welches mit seinen beiden als Lagerbereich (9.1) ausgebildeten Enden in einem Loch eines Sitzteilseitenrahmens drehbar lagerbar ist, wobei auf dem Querrohr (9) drehfest und axial festgelegt zwei Lenker (8) sitzen, deren unteres Ende jeweils drehbar an der Fahrzeugstruktur lagerbar ist, wobei zwischen den Lagerbereichen (9.1) ein im Durchmesser größerer Mittelbereich (9.2) des Querrohrs (9) angeordnet ist und die Lenker (8) jeweils ein Lagerloch (13) aufweisen, mit dem sie auf den Lagerbereichen (9.1) aufsitzen, wobei die Lenker (8) auf ihrer dem Mittelbereich (9.2) abgewandten Seite durch einen anliegenden Wulst (18) in einer Richtung axial am Querrohr (9) festgelegt sind, **dadurch gekennzeichnet, dass** zwischen dem Mittelbereich (9.2) und den Lagerbereichen (9.1) eine Durchmesserstufe angeordnet ist, die durch eine konische Anlagefläche (17) des Querrohrs (9) gebildet ist, an der eine im Lagerloch (13) ausgebildete konische Anlageschulter (14) anliegt, so dass die Lenker (8) auch in der anderen Richtung axial am Querrohr (9) festgelegt sind, wobei im Lagerloch (13) mindestens eine axiale Nut (16) ausgebildet ist, in die beim Herstellungsprozess durch Kaltverformung des angrenzenden Endes des Mittelbereichs (9.2) Material zur drehfesten Festlegung der Lenker (8) am Querrohr (9) eingeflossen ist.

2. Höhenverstelleinrichtung nach Anspruch 1, **dadurch gekennzeichnet, dass** die konische Anlageschulter (14) des Lagerloches (13) etwa in der Mitte der Blechstärke (b) des Lenkers (8) in eine zylindrische Wandung (15) des Lagerlochs (13) übergeht.

3. Höhenverstelleinrichtung nach Anspruch 1 oder 2, **dadurch gekennzeichnet, dass** der Öffnungswinkel (a) der Anlageschulter (14) zwischen 45 und 70° liegt.

4. Höhenverstelleinrichtung nach Anspruch 3, **dadurch gekennzeichnet, dass** der Öffnungswinkel (α) 60° beträgt.

5. Verfahren zur Herstellung einer Höhenverstelleinrichtung eines Kraftfahrzeugsitzes, umfassend die folgenden Schritte:
- Bereitstellen eines Querrohres (9) mit durchgehend gleichem Durchmesser (d1)-
- Reduzierung des Durchmessers (d1) des Querrohres (9) an beiden Enden zur Schaffung von Lagerbereichen (9.1) mit dem Durchmesser (d2), zwischen denen ein Mittelbereich (9.2) mit dem ursprünglichen Durchmesser (d1) verbleibt, wobei der Übergang zwischen den Lagerbereichen (9.1) und dem Mittelbereich (9.2) jeweils in einer Durchmesserstufe erfolgt,
- Bereitstellen zweier Lenker (8) mit jeweils einem Lagerloch (13), einer im Lagerloch (13) ausgebildeten konischen Anlageschulter (14) und mindestens eine im Lagerloch (13) ausgebildete Nut (16),
- Aufschieben des Lenkers (8) mittels seines Lagerloches (13) auf den Lagerbereich (9.1) bis zur Anlage an die Durchmesserstufe zwischen Mittelbereich (9.2) und Lagerbereich (9.1),
- Aufbringen einer Axialkraft auf den Lenker (8) und/oder das Querrohr (9) zur Kaltverformung des Querrohres (9) im Bereich der Durchmesserstufe zu einer konischen Anlagefläche (17) für die konische Anlageschulter (14) des Lagerloches (13) und zum Materialfluss in die mindestens eine Nut (16) des Lagerloches (13),
- Ausbildung eines an der Außenseite des Lenkers (8) anliegenden Wulstes (18).

## Claims

1. Height adjustment device of a motor vehicle seat, having a transverse pipe (9) which can be rotatably supported with the two ends thereof which are constructed as a bearing region (9.1) in a hole of a seat member side frame, wherein two links (8) whose lower end can be rotatably supported in each case on the vehicle structure are located on the transverse pipe (9) in a rotationally secure and axially secured manner, wherein there is arranged between the bearing regions (9.1) a central region (9.2) of the transverse pipe (9) which is larger in terms of diameter and the links (8) each have a bearing hole (13), by means of which they rest on the bearing regions (9.1), wherein the links (8) are axially secured to the transverse pipe (9) in one direction at the side thereof facing away from the central region (9.2) by an adjacent bead (18), **characterised in that** between the central region (9.2) and the bearing regions (9.1) there is arranged a diameter step which is formed by a conical abutment face (17) of the transverse pipe (9), against which a conical abutment shoulder (14) which is formed in the bearing hole (13) is in abutment so that the links (8) are also axially secured to the transverse pipe (9) in the other direction, wherein there is formed in the bearing hole (13) at least one axial groove (16), into which, during the production process by means of cold-forming of the adjacent end of the central region (9.2), material for fixing the links (8) in a rotationally secure manner to the transverse pipe (9) has flowed.

2. Height adjustment device according to claim 1, **characterised in that** the conical abutment shoulder (14) of the bearing hole (13) merges substantially at the centre of the sheet thickness (b) of the link (8) into a cylindrical wall (15) of the bearing hole (13).

3. Height adjustment device according to claim 1 or 2, **characterised in that** the opening angle (a) of the abutment shoulder (14) is between 45 and 70°.

4. Height adjustment device according to claim 3, **characterised in that** the opening angle (a) is 60°.

5. Method for producing a height adjustment device of a motor vehicle seat, comprising the following steps:
- providing a transverse pipe (9) with a continuously identical diameter (d1),
- reducing the diameter (d1) of the transverse pipe (9) at both ends in order to provide bearing regions (9.1) with the diameter (d2) between which a central region (9.2) with the original diameter (d1) remains, wherein the transition between the bearing regions (9.1) and the central region (9.2) is carried out in each case in a diameter step,
- providing two links (8) each having a bearing hole (13), a conical abutment shoulder (14) which is formed in the bearing hole (13) and at least one groove (16) which is formed in the bearing hole (13),
- pushing the link (8) by means of the bearing hole (13) thereof onto the bearing region (9.1) as far as abutment against the diameter step between the central region (9.2) and bearing region (9.1),
- applying an axial force to the link (8) and/or the transverse pipe (9) in order to cold-form the transverse pipe (9) in the region of the diameter step to form a conical abutment face (17) for the conical abutment shoulder (14) of the bearing hole (13) and for material flow into the at least one groove (16) of the bearing hole (13),
- forming a bead (18) which abuts the outer side of the link (8).

## Revendications

1. Dispositif de réglage en hauteur d'un siège de véhicule automobile, le dispositif présentant un tube transversal (9) qui peut être logé à l'aide de ses deux extrémités conçues sous forme de zone de palier (9.1) dans un orifice d'un châssis latéral de l'assise, deux guidons (8), dont les extrémités inférieures respectives peuvent être logées de manière rotative sur la structure du véhicule, étant placés sur le tube transversal (9) de sorte à être bloqués axialement, une zone centrale (9.2) du tube transversal (9) ayant un diamètre supérieur, étant disposée entre les zones de palier (9.1) et les guidons présentant respectivement un orifice de logement (13) à l'aide duquel ils sont placés sur les zones de palier (9.1), les guidons (8) étant, sur leur côté opposé à la zone centrale (9.2), bloqués axialement sur le tube transversal (9) au moyen d'un bourrelet adjacent, **caractérisé en ce qu'**entre la zone centrale (9.2) et les zones de logement (9.1) est disposé un étagement de diamètre qui est formé par une surface d'appui conique (17) du tube transversal (9) sur laquelle s'appuie un épaulement d'appui conique (17) formé dans l'orifice de logement (13), de sorte que les guidons (8) sont bloqués axialement sur le tube transversal (9) également dans l'autre direction, au moins une rainure axiale (16) étant formée dans l'orifice de logement (13), rainure axiale, dans laquelle a coulé du matériau pour le blocage en rotation des guidons (8) sur le tube transversal (9) lors du processus de fabrication par déformation à froid de l'extrémité adjacente de la zone centrale (9.2).

2. Dispositif de réglage en hauteur suivant la revendication 1, **caractérisé en ce qu'**à peu près au milieu de l'épaisseur de tôle (b) de la bielle (8), l'épaulement d'appui conique (14) de l'orifice de logement (13) prend la forme d'une paroi cylindrique (15) de l'orifice de logement (13).

3. Dispositif de réglage en hauteur suivant la revendication 1 ou 2, **caractérisé en ce que** l'angle d'ouverture (α) de l'épaulement d'appui (14) se situe entre 45 et 70°.

4. Dispositif de réglage en hauteur suivant la revendication 1 ou 2, **caractérisé en ce que** l'angle d'ouverture (α) est de 60°.

5. Procédé de fabrication d'un dispositif de réglage en hauteur d'un siège de véhicule automobile, le procédé comprenant les étapes suivantes, qui consistent à :
- fournir un tube transversal (9) avec un diamètre identique sur toute la longueur (d1-),
- réduire le diamètre (d1) du tube transversal (9) aux deux extrémités pour la création de zones de logement (9.1) ayant le diamètre (d2), zones, entre lesquelles demeure une zone centrale (9.2) ayant le diamètre initial (d1), la transition entre les zones de logement (9.1) et la zone centrale (9.2) ayant respectivement lieu par un étagement de diamètre,
- fournir deux guidons (8) présentant respectivement un orifice de logement (13), un épaulement d'appui conique (14) conçu dans l'orifice de logement (13) et au moins une rainure (16) formée dans l'orifice de logement (13),
- pousser la bielle (8) au moyen de son orifice de logement (13) sur la zone de logement (9.1) jusqu'à ce qu'elle vienne en appui contre l'étagement de diamètre entre la zone centrale (9.2) et la zone de logement (9.1),
- appliquer une force axiale à la bielle (8) et/ou au tube transversal (9) pour la déformation à froid du tube transversal (9) dans la zone de l'étagement de diamètre pour obtenir une surface d'appui conique (17) pour l'épaulement d'appui conique (14) de l'orifice de logement (13) et pour faire couler du matériau dans l'au moins une rainure (16) de l'orifice de logement (13),
- former un bourrelet adjacent à la face extérieure de la bielle (8).
